# EUROPÄISCHE PATENTANMELDUNG

(11) **EP 4 656 023 A1**
(43) Veröffentlichungstag der Anmeldung: **03.12.2025**
(21) Anmeldenummer: 25167656.5
(22) Anmeldetag: 01.04.2025
(51) Int. Cl.: A01B 69/04

(54) **PLANUNGSSYSTEM**

(30) Priorität: 27.05.2024 DE 102024114798
(71) Anmelder: CLAAS Selbstfahrende Erntemaschinen GmbH, 33428 Harsewinkel (DE)
(72) Erfinder: Verploegen, Thijs, 40625 Düsseldorf (DE); Fischer, Josef, 88400 Biberach (DE); Peters, Stefan, 48147 Münster (DE); Wieckhorst, Jan Carsten, 29525 Uelzen Orsteil Hanstedt 2 (DE); Redenius, Jannik, 32361 Pr. Oldendorf (DE); Schröder, Axel, 33332 Gütersloh (DE); Hülsmann, Felix, 33615 Bielefeld (DE); Monkenbusch, Robin, 33378 Rheda-Wiedenbrück (DE)
(74) Vertreter: CLAAS Gruppe

(57) **Zusammenfassung**

Die vorliegende Erfindung betrifft ein Planungssystem (1), umfassend eine Benutzerschnittstelle (2), eine Kommunikationseinheit (3), eine Recheneinheit (4) und eine Speichereinheit (5), wobei das Planungssystem (1) dazu eingerichtet ist, eine Planung (6) zur Durchführung eines landwirtschaftlichen Arbeitsprozesses oder zumindest eines vom Arbeitsprozess umfassten Teilprozesses zu generieren und an eine für die Durchführung eingerichtete autonome landwirtschaftliche Arbeitsmaschine (7) zur Steuerung, Regelung und/oder Parametrisierung der autonomen Arbeitsmaschine (7) und zumindest eines an der Arbeitsmaschine (7) adaptierten Anbaugerätes (8) zu übertragen, wobei das Planungssystem (1) dazu eingerichtet ist, zur Generierung der Planung (6) für den Betrieb der autonomen Arbeitsmaschine (7) in zumindest einer Datenbank (9) hinterlegte Daten abzurufen und zu verwenden, welche im Zeitpunkt der Generierung der Planung (6) verfügbare arbeitsmaschinenspezifische, anbaugerätespezifische und feldspezifische Parameter (10) sowie Umgebungs- und Umweltparameter (11) sind, und die Planung (6) mittels der Benutzerschnittstelle (2) auszugeben.

## Beschreibung

Die vorliegende Erfindung betrifft ein Planungssystem gemäß dem Oberbegriff des Anspruches 1.

Aus der DE 10 2022 110 132 A1 ist ein auf Datenaustausch basierendes Assistenzsystem bekannt, welches ein für den Einsatz auf einer landwirtschaftlichen Fläche geeignetes autonomes Fahrzeugs, das als landwirtschaftliche Arbeitsmaschine agiert, konfiguriert und den Einsatz plant sowie dem Fahrzeug die für den Einsatz erforderlichen Daten übermittelt und das Fahrzeug steuert und den Arbeitsbetrieb überwacht. Hierzu wird ein manuell erstellter kundenspezifischer Einsatzplan an das Assistenzsystem übertragen, welcher eine durch das autonome Fahrzeug zu erbringende Dienstleitung nach Art und Umfang beschreibt. Hierfür stellt ein Auftraggeber den kundenspezifischen Einsatzplan bereit. Dabei wird die jeweilige Einsatzzeit vorgegeben, nämlich zumindest der Zeitraum in welchem die Dienstleistung zu erbringen ist. Weiter umfasst der kundenspezifische Einsatzplan den oder die Einsatzorte sowie die Reihenfolge und Art der durchzuführenden Arbeitstätigkeiten.

Die Kommunikation des Auftraggebers mit dem Assistenzsystem erfolgt durch eine externe Schnittstelle oder über eine Plattform, mittels der ein kundenspezifischer Einsatzplan konfigurierbar und an das Assistenzsystem übertragbar ist. Die aus dem vorgegebenen kundenspezifischen Einsatzplan resultierende, durch das Assistenzsystem erstellte Konfiguration des als landwirtschaftliche Arbeitsmaschine agierenden Fahrzeugs und die Einsatzplanung sind für den Auftraggeber intransparent.

Ausgehend vom vorstehend genannten Stand der Technik liegt der Erfindung die Aufgabe zugrunde, ein Planungssystem bereitzustellen, durch welches eine vorausplanende Konfiguration autonomer landwirtschaftlicher Arbeitsmaschinen vereinfacht wird.

Diese Aufgabe wird erfindungsgemäß durch ein Planungssystem mit den Merkmalen des Anspruches 1 gelöst. Vorteilhafte Weiterbildungen sind Gegenstand der abhängigen Ansprüche.

Gemäß dem Anspruch 1 wird ein Planungssystem vorgeschlagen, welches eine Benutzerschnittstelle, eine Kommunikationseinheit, eine Recheneinheit und eine Speichereinheit umfasst. Das Planungssystem ist dazu eingerichtet ist, eine Planung zur Durchführung eines landwirtschaftlichen Arbeitsprozesses oder zumindest eines vom Arbeitsprozess umfassten Teilprozesses zu generieren und an zumindest eine für die Durchführung eingerichtete autonome landwirtschaftliche Arbeitsmaschine zur Steuerung, Regelung und/oder Parametrisierung der autonomen Arbeitsmaschine und zumindest eines an der Arbeitsmaschine adaptierten Anbaugerätes zu übertragen. Erfindungsgemäß ist vorgesehen, dass das Planungssystem dazu eingerichtet ist, zur Generierung der Planung für den Betrieb der autonomen Arbeitsmaschine in zumindest einer Datenbank hinterlegte Daten abzurufen und zu verwenden, welche im Zeitpunkt der Generierung der Planung verfügbare arbeitsmaschinenspezifische, anbaugerätespezifische und feldspezifische Parameter sowie Umgebungs- und Umweltparameter sind, und die generierte Planung mittels der Benutzerschnittstelle auszugeben.

Mit dem Planungssystem können alle relevanten Parameter und Einstellungen von der autonomen Arbeitsmaschine und dem daran adaptierten Anbaugerät systemtechnisch unabhängig und vor dem geplanten Einsatz der autonomen Arbeitsmaschine generiert werden. Hierzu kann das Planungssystem cloudbasiert oder lokal servergestützt ausgeführt sein.

Der Zugriff auf die Benutzerschnittstelle kann vorzugsweise webbasierend erfolgen, insbesondere durch eine mittels Internetbrowser ausführbare Webseite, sodass ein berechtigungsabhängiger Zugriff auf das Planungssystem über ein Netzwerk erfolgen kann.

Insbesondere kann das Planungssystem auf spezifisches Prozesswissen zugreifen, welches in der zumindest einen Datenbank hinterlegt oder hinterlegbar ist, um den Vorgang der Optimierung der Planung zu verbessern. Die Hinterlegbarkeit von Prozesswissen ermöglicht dabei Änderungen und/oder Ergänzungen.

Die autonome landwirtschaftliche Arbeitsmaschine kann einerseits spezialisiert ausgeführt sein, wie es beispielsweise ein autonomer Mähdrescher oder Feldhäcksler wären, oder andererseits generalisiert. Generalisiert heißt dabei, dass es sich bei der autonomen landwirtschaftlichen Arbeitsmaschine um eine autonome landwirtschaftliche Universal-Arbeitsmaschine handelt, welche sich durch wechselnde Konfigurationen der Anbaugeräte und wechselnde Softwarebausteine zur Ansteuerung der Arbeitsmaschine und/oder der adaptierten Anbaugeräte auszeichnet, um für eine Vielzahl unterschiedlicher landwirtschaftlicher Arbeitsaufgaben verwendet werden zu können.

Die einzelnen Arbeitsprozesse und/oder die hiervon umfassten Teilprozesse einer landwirtschaftlichen Erntekampagne folgen dabei bedarfsweise, beispielsweise abhängig von der Art des Ernteguts, von Umgebungsbedingungen und/oder einer Zielsetzung eines der Erntekampagne zugrundeliegenden Anbau-, Bearbeitungs-, und/oder Ernteprozesses, aufeinander.

Bevorzugt kann das Planungssystem dazu eingerichtet sein, bei der Generierung der Planung Ablaufdaten einer abzuarbeitenden landwirtschaftlichen Erntekampagne, die den Arbeitsprozess sowie zumindest einen weiteren abweichenden Arbeitsprozess und eine mit den Arbeitsprozessen verbundene Ressourcenplanung umfasst, als Eingangsgrößen zur Optimierung der Planung zu berücksichtigen. Hierdurch kann dem Umstand Rechnung getragen werden, dass die einzelnen Arbeitsprozesse der landwirtschaftlichen Erntekampagne zeitlich aufeinander aufbauen und in der Regel voneinander abhängig sind.

Der zeitliche Abstand zwischen den einzelnen Arbeitsprozessen kann variieren. So folgt beispielsweise auf das Pflügen der zeitnahe Einsatz einer Egge oder eines sonstigen Bodenkultivators, der zur Verbesserung der Krümelung des Bodens beiträgt, bevor die Aussaat erfolgt. Hingegen liegt zwischen dem Arbeitsprozess der Aussaat und dem Arbeitsprozess der Ernte ein signifikant größerer Zeitraum, in welchem die landwirtschaftliche Erntekampagne daher äußeren Einflüsse in größerem Maß unterliegt. Zeitlich dazwischenliegend, d.h. zwischen dem Arbeitsprozess der Aussaat und dem Arbeitsprozess der Ernte, kann der Einsatz von Dünger und/oder Pestiziden als weitere Arbeitsprozesse der landwirtschaftlichen Erntekampagne vorgesehen sein.

Insbesondere kann das Planungssystem dazu eingerichtet sein, auf wenigstens eine Planung eines in der Vergangenheit liegenden Planungsvorgangs, insbesondere einer Vorjahresplanung, zuzugreifen und darauf basierend dem durchzuführenden Arbeitsprozess die Planung zuzuordnen, die dem korrespondierenden Arbeitsprozess in der Vergangenheit zugrunde lag. Hierdurch kann die Generierung der Planung des durchzuführenden Arbeitsprozesses vereinfacht und beschleunigt werden, indem der in der Vergangenheit liegende Planungsvorgang als Basis verwendet wird.

Gemäß einer Weiterbildung kann das Planungssystem dazu eingerichtet sein, bei der Generierung der Planung dem durchzuführenden Arbeitsprozess zeitlich vorgelagerte und/oder nachgelagerte Arbeitsprozesse und/oder eine in einem zeitlich vorgelagerten Arbeitsprozess generierte Routenplanung und/oder eine durch eine landwirtschaftliche Arbeitsmaschine abgefahrene Route zu berücksichtigen.

In einer weiteren vorteilhaften Ausgestaltung kann das Planungssystem dazu eingerichtet sein, automatisch einen Vorschlag für die zu generierende Planung für den durchzuführenden Arbeitsprozess basierend auf von in einem in der Vergangenheit liegenden Vergleichszeitraum erfassten Daten desselben Arbeitsprozesses an derselben Lokation zu generieren und mittels der Benutzerschnittstelle zur Auswahl zu stellen.

Zusätzlich oder alternativ kann das Planungssystem dazu eingerichtet sein, automatisch einen Vorschlag für die zu generierende Planung für den durchzuführenden Arbeitsprozess basierend auf Vergleichsdaten desselben Arbeitsprozesses an zumindest einer anderen Lokation zu generieren und mittels der Benutzerschnittstelle zur Auswahl zu stellen. Dies kann dann vorteilhaft sein, wenn für die betreffende Lokation, für welche die Planung erstellt werden soll, keine Daten vorliegen, beispielsweise bei einer erstmaligen Bearbeitung eines Feldes für den Einsatz einer anderen Erntegutart.

Hierzu kann das Planungssystem dazu eingerichtet sein, die Vergleichsdaten desselben an mehreren anderen Lokationen durchgeführten Arbeitsprozesses auszuwerten und für die jeweiligen Daten Mittelwerte zu bilden und/oder die der Durchführung eines Arbeitsprozesses zugrundeliegenden Vergleichsdaten einer Lokation mit maximalem Ertrag zu bestimmen und die auf Mittelwerten und/oder maximalem Ertrag basierenden Daten zur Generierung der Planung zu verwenden. Dadurch kann, beispielsweise bei einer erstmaligen Bearbeitung der Lokation, eine Planungsgrundlage für die zu generierende Planung geschaffen werden.

Die Vergleichsdaten desselben an der zumindest einen anderen Lokation durchgeführten Arbeitsprozesses umfassen dabei unter anderem Art und Typ der eingesetzten autonomen Arbeitsmaschine und des Anbaugerätes, deren Planung im Zeitpunkt der Durchführung des Arbeitsprozesses, Erntegutart, Bodenbeschaffenheit, Witterungsbedingungen sowie Flächendaten, um eine Vergleichbarkeit der Daten zu ermöglichen.

Gemäß einer Weiterbildung kann zur Generierung der optimierten Planung durch das Planungssystem vorgesehen sein, dass das Planungssystem vorhandene Vergleichsdaten mittels künstlicher Intelligenz analysiert. Dazu kann das Planungssystem ein künstliches neuronales Netzwerk verwenden, um die an einer oder mehrerer Lokationen erhobenen Vergleichsdaten für eine spezifische Erntekampagne und/oder einen spezifischen Arbeitsprozess, welche die in der Vergangenheit verwendeten arbeitsmaschinenspezifischen, anbaugerätespezifischen und feldspezifischen Parameter sowie Umgebungs- und Umweltparameter repräsentieren, als Eingangsdatensatz auszuwerten und als Ausgangsdaten die darauf basierende Planung zu bestimmen. Insbesondere kann zur Analyse der Vergleichsdaten ein in der Recheneinheit hinterlegter, auf künstlicher Intelligenz basierender, trainierbarer Analysealgorithmus verwendet werden. Der lernfähige Analysealgorithmus kann beispielsweise auf einem trainierten künstlichen neuronalen Netz, vorzugsweise ein Artificial Neural Network, ein sogenanntes ANN, oder ein Convolutional Neural Network, ein sogenanntes CNN, basieren. Auch andere trainierbare Kl-Architekturen sind gleichermaßen als Basis für den Analysealgorithmus vor stellbar.

Gemäß einer Weiterbildung kann das Planungssystem dazu eingerichtet sein, mittels der Benutzerschnittstelle die Generierung der Planung für den durchzuführenden Arbeitsprozess dialoggeführt durch manuelle Interaktion durchzuführen. Dabei kann eine Reihenfolge abzuarbeitender Dialogschritte durch das Planungssystem vorgegeben sein, die im Wesentlichen hierarchisch aufeinander aufbauen. So kann zur Generierung der Planung in einem ersten Dialogschritt zunächst die Art des zu planenden Arbeitsprozesses und/oder eines von diesem umfassten Teilprozesses abgefragt werden. Im nachfolgenden Dialogschritt kann eine Kombination von autonomen Arbeitsmaschine und dem daran adaptierten Anbaugerät bestimmt werden. In einem darauffolgenden Dialogschritt können die Lage des zu bearbeitenden Feldes sowie Daten zu bestehenden Feldgrenzen und/oder Besonderheiten des Feldes, beispielsweise auf dem Feld vorhandenen bekannten Hindernissen, bestimmt werden. In einem nachfolgenden Dialogschritt wird der Zugriff auf in der zumindest einen Datenbank hinterlegte äußere Bedingungen für den gewünschten Arbeitsprozess und/oder Teilprozess unter Berücksichtigung von Arbeits- bzw. Umweltbedingungen ermöglicht.

Durch die Ausgabe der generierten Planung mittels der Benutzerschnittstelle wird es dem Bediener des Planungssystems ermöglicht, diesem beispielsweise einen Überblick über Ressourcenverbrauch und Einsatzdauer der autonomen Arbeitsmaschine zu geben. Dies ermöglicht es dem Bediener, im Nachgang der Planung die generierte Planung manuell anzupassen und, insbesondere durch das Planungssystem aktiv unterstützt, nach seinen Vorstellungen zu optimieren.

Bevorzugt kann das Planungssystem dazu eingerichtet sein, unter Verwendung von in der zumindest einen Datenbank hinterlegten topografischen Daten eines Feldes, auf welchem der für die autonome Arbeitsmaschine zu planende Arbeitsprozess und/oder Teilprozess durchzuführen ist, und den korrespondierenden feldspezifischen Parametern des Feldes ein digitales Abbild des Feldes zu generieren und von den in der zumindest einen Datenbank hinterlegten arbeitsmaschinenspezifischen und anbaugerätespezifischen Parametern ein digitales Abbild der autonomen landwirtschaftlichen Arbeitsmaschine und des zumindest einen an die Arbeitsmaschine adaptierten Anbaugerätes zu generieren, um mittels eines in der Speichereinheit hinterlegten mathematischen Modells die Durchführung des Arbeitsprozesses und/oder des Teilprozesses zu simulieren und auf Basis der Simulation die Planung zu generieren.

Arbeitsmaschinenspezifische und anbaugerätespezifische Parameter der autonomen landwirtschaftlichen Arbeitsmaschine sowie des daran adaptierten Anbaugerätes sind insbesondere Geometriedaten, Betriebszustandsdaten und/oder Ausstattungsdaten.

Feldspezifische Parameter sind unter anderem Bodendaten, einschließlich Daten zur Bodenverdichtung und/oder Daten zur Bodenaufbereitung, Bestandsdaten, einschließlich pflanzenbaulicher Spezifika, wie Daten zur Verunkrautung, Daten zu Krankheiten und Daten zu einem Schädlingsbefall, Ertragsdaten und/oder Flächendaten, einschließlich landwirtschaftlicher Kennzahlen, wie Daten zur Düngung, Daten zur Bewässerung, Daten zu Herbiziden und Daten zu Fungiziden, Geodaten und/oder Wetterdaten, einschließlich langfristigerer Klimadaten.

Weiterhin kann das Planungssystem dazu eingerichtet sein, die durch die Simulation generierte Planung mittels der Benutzerschnittstelle, insbesondere visuell wahrnehmbar, auszugeben, wobei mittels der Benutzerschnittstelle nachträglich manuelle Änderungen von der Simulation zugrundeliegenden Rahmenbedingungen durchführbar sind, wobei das Planungssystem dazu eingerichtet ist, die Simulation basierend auf den nachträglichen Änderungen erneut durchzuführen. Eine visuell wahrnehmbare Ausgabe der durch die Simulation generierten Planung kann durch in der Datenbank hinterlegte Grafiken und/oder Abbildungen von autonomen Arbeitsmaschinen, daran zu adaptierenden Anbaugeräten und/oder einer strukturierten Ausgabe der Planung erfolgen. Insbesondere kann die Benutzerschnittstelle zur Eingabe und/oder Auswahl und/oder Modifikation zumindest eines durchzuführenden Arbeitsprozesses sowie einer damit verbundenen Route eingerichtet sein, die der Simulation zugrunde liegt.

Insbesondere kann das Planungssystem dazu eingerichtet sein, mittels der Simulation generierte Arbeitsabläufe des Arbeitsprozesses und/oder des Teilprozesses und damit verbundene Ergebnisgrößen mittels der Benutzerschnittstelle zu visualisieren. Ergebnisgrößen der Simulation sind unter anderem Ressourcenverbrauch, gefahrene Strecke, Arbeitszeit, Arbeitsbeginn und Arbeitsende sowie für das Durchfahren von Vorgewenden erforderliche Parameter. Für das Durchfahren von Vorgewenden erforderliche Parameter umfassen unter anderem einen räumlichen Versatz zu einer georeferenzierten Feldgrenze, eine Anzahl von parallel gestaffelten Vorgewendeabschnitten respektive Vorgewendesequenzen und/oder eine Arbeitsbreite. Dabei kann die Simulation feldspezifische Gegebenheiten, wie Hindernisse oder dergleichen, berücksichtigen, die Einfluss auf die Ergebnisgrößen haben.

Bevorzugt kann das Planungssystem dazu eingerichtet sein, die generierte Planung vor der Durchführung des geplanten Arbeitsprozesses, insbesondere innerhalb eines vorgebbaren zeitlichen Abstands vor der Durchführung, mittels der Benutzerschnittstelle zu visualisieren. Dem Bediener des Planungssystems wird somit die Möglichkeit gegeben, die Datenbasis und die daraus resultierende Planung zu prüfen, bevor die autonome Arbeitsmaschine den geplanten Arbeitsprozess aktiv umsetzt. Insbesondere kann die generierte Planung vor der Durchführung des geplanten Arbeitsprozesses durch den Bediener des Planungssystems mittels der Benutzerschnittstelle editiert werden. Dies kann erforderlich sein, wenn zwischenzeitlich Ereignisse eingetreten sind, die im Zeitpunkt der Planung durch das Planungssystem nicht bekannt und/oder Daten und Informationen hierzu nicht verfügbar waren. Lediglich beispielhaft hierfür sind Abweichungen von prognostizierten Wetterdaten und/oder eine ungeplante Reparatur der für die Durchführung vorgesehenen autonomen Arbeitsmaschine und/oder des Anbaugerätes zu nennen.

Gemäß einer Weiterbildung kann das Planungssystem dazu eingerichtet sein, automatisch zu prüfen, ob in der zumindest einen Datenbank eine Aktualisierung der Daten erfolgt ist, welche im Zeitpunkt der Generierung der Planung verwendet wurden, und diese Aktualisierung mittels der Benutzerschnittstelle zu visualisieren. Dies eröffnet dem Bediener des Planungssystems die Möglichkeit, die generierte Planung unter Berücksichtigung aktualisierter Daten zu modifizieren. Ebenso kann eine bereits durchgeführte Simulation wegen der Aktualisierung der arbeitsmaschinenspezifischen, anbaugerätespezifischen und/oder feldspezifischen Parameter und/oder der aktualisierten Umgebungs- und Umweltparameter, insbesondere automatisch, erneut durchgeführt oder vom Bediener veranlasst werden.

Insbesondere kann das Planungssystem dazu eingerichtet sein, zumindest eine Erntekampagne auf Basis von Daten zu planen, die in einem Rechner mit einer Farm-Management-Software als Datenquelle hinterlegt sind und/oder dass die Datenquelle ein Rechner mit einer landwirtschaftlichen Auftragsmanagementsoftware ist.

Gemäß einer bevorzugten Weiterbildung kann das Planungssystem dazu eingerichtet sein, mittels der Benutzerschnittstelle einen innerhalb der zumindest einen geplanten Erntekampagne durchzuführenden einzelnen Arbeitsprozess auszuwählen und/oder einen dem ausgewählten Arbeitsprozess zugehörigen Teilprozess auszuwählen. Das Planungssystem ermöglicht es, dass der Bediener bis auf Teilprozessebene hinunter die jeweilige Planung durch das Planungssystem erstellen und simulieren lassen kann.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines Planungssystems;
- Fig. 2: schematisch eine Darstellung einer Benutzerschnittstelle des Planungssystems;
- Fig. 3: schematisch eine Darstellung einer mittels der Benutzerschnittstelle ausgewählten Menüoption des Planungssystems; und
- Fig. 4: schematisch eine Darstellung einer durch das Planungssystem generierten Route, die mittels der Benutzerschnittstelle ausgegeben wird.

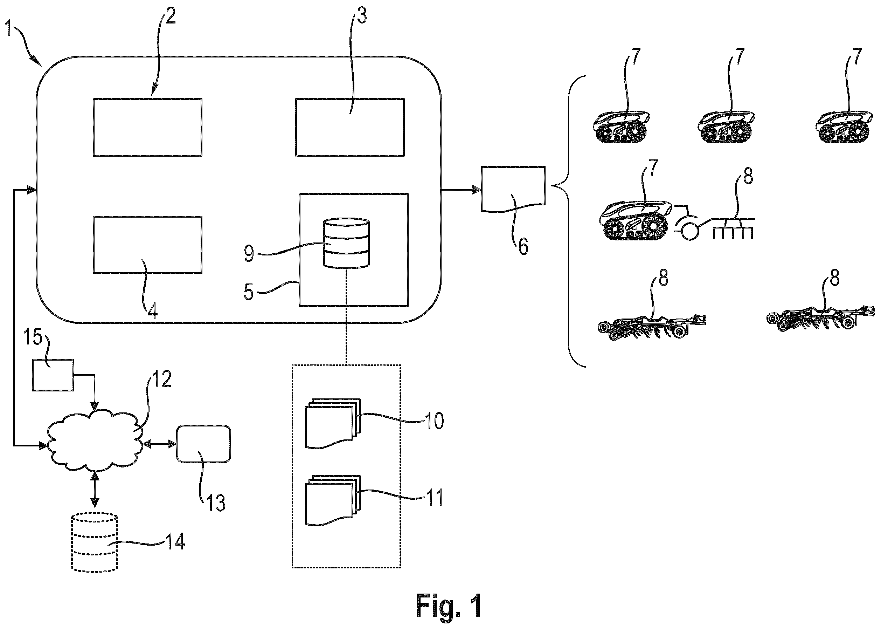

In Fig. 1 ist schematisch und exemplarisch eine Darstellung eines erfindungsgemäßen Planungssystems 1 gezeigt.

Das Planungssystem 1 umfasst eine Benutzerschnittstelle 2, eine Kommunikationseinheit 3, eine Recheneinheit 4 und eine Speichereinheit 5. Das Planungssystem 1 ist dazu eingerichtet, eine Planung 6 zur Durchführung eines landwirtschaftlichen Arbeitsprozesses oder zumindest eines vom Arbeitsprozess umfassten Teilprozesses dem Zeitpunkt der Durchführung vorauseilend zu generieren. Das Planungssystem 1 ist weiter dazu eingerichtet, die Planung 6 mittels der Kommunikationseinheit 3 an eine für die Durchführung eingerichtete autonome landwirtschaftliche Arbeitsmaschine 7 zur Steuerung, Regelung und/oder Parametrisierung der autonomen Arbeitsmaschine 7 und zumindest eines an der Arbeitsmaschine 7 adaptierten Anbaugerätes 8 zu übertragen. Des Weiteren empfängt das Planungssystem 1 mittels der Kommunikationseinheit 3 Daten und Informationen, die von der autonomen landwirtschaftlichen Arbeitsmaschine 7 und/oder dem Anbaugerät 8 während der Durchführung des geplanten landwirtschaftlichen Arbeitsprozesses oder des zumindest einen Teilprozesses generiert werden.

Das Planungssystem 1 ist dazu eingerichtet, zur Generierung der Planung 6 für den Betrieb der autonomen Arbeitsmaschine 7 in zumindest einer Datenbank 9 hinterlegte Daten abzurufen und zu verwenden, welche im Zeitpunkt der Generierung der Planung 6 verfügbare arbeitsmaschinenspezifische, anbaugerätespezifische und feldspezifische Parameter 10 sowie Umgebungs- und Umweltparameter 11 sind. Die auf dieser Grundlage generierte Planung 6 wird mittels der Benutzerschnittstelle 2 ausgeben.

Der Zugriff auf die Benutzerschnittstelle 2 kann vorzugsweise webbasierend, insbesondere durch eine mittels Internetbrowser ausführbare Webseite 13, erfolgen, sodass ein berechtigungsabhängiger Zugriff auf das Planungssystem 1 über ein Netzwerk 12 erfolgen kann.

Über das Netzwerk 12 erfolgt der Zugriff des Planungssystems 1 auf zumindest eine externe Datenquelle 14. Bei der externen Datenquelle 14 kann es sich ebenfalls um eine Datenbank handeln und/oder ein Farmmanagementsystem 15, in welchem arbeitsmaschinenspezifische, anbaugerätespezifische und feldspezifische Parameter 10 sowie Umgebungs- und Umweltparameter 11 hinterlegt oder hinterlegbar sind.

So kann das Planungssystem 1 auf der Basis von in der zumindest einen Datenbank 9 und/oder im Farmmanagementsystem 15 hinterlegten Informationen und Daten, die von dem Planungssystem 1 abgerufen werden, eine oder mehrere Erntekampagnen abbilden. Die Informationen und Daten umfassen beispielsweise Angaben zu bearbeitbaren Feldern, zu im landwirtschaftlichen Fuhrpark enthaltenen autonomen Arbeitsmaschinen 7 und daran adaptierbaren Anbaugeräten 8 sowie deren jeweilige Verfügbarkeit. Die einzelnen Arbeitsprozesse und/oder die hiervon umfassten Teilprozesse einer landwirtschaftlichen Erntekampagne folgen dabei bedarfsweise, beispielsweise abhängig von der Art des Ernteguts, von Umgebungsbedingungen und/oder einer Zielsetzung eines der Erntekampagne zugrundeliegenden Anbau-, Bearbeitungs-, und/oder Ernteprozesses, aufeinander.

Mittels der Benutzerschnittstelle 2 kann ein Benutzer des Planungssystems 1 eine Erntekampagne und/oder einen einzelnen Arbeitsprozess und/oder einen Teilprozess eines Arbeitsprozesses auswählen, um diese bzw. diesen zu planen. So kann eine auswählbare Erntekampagne beispielsweise alle den Anbau und das Ernten von Getreide umfassenden Arbeitsprozesse umfassen. In einem nachfolgenden Schritt wählt der Bediener einen zugehörigen Arbeitsprozess, beispielsweise den Arbeitsprozess Bodenbearbeitung oder Pflanzenschutz, aus. Der Arbeitsprozess Bodenbearbeitung kann wiederum in mehrere Teilprozesse untergliedert sein. Das Planungssystem 1 generiert auf der Grundlage der benutzerspezifischen Auswahl des Arbeitsprozesses und/oder des Teilprozesses die Planung 6.

Das Planungssystem 1 ist dazu eingerichtet, bei der Generierung der Planung 6 Ablaufdaten einer abzuarbeitenden landwirtschaftlichen Erntekampagne, die den Arbeitsprozess sowie zumindest einen weiteren abweichenden Arbeitsprozess und eine mit den Arbeitsprozessen verbundene Ressourcenplanung umfasst, als Eingangsgrößen zur Optimierung der Planung 6 zu berücksichtigen. Exemplarisch sind die dem Arbeitsprozess Pflanzenschutz vorangehenden Arbeitsprozesse Bodenbearbeitung und Aussaat zu nennen. Nachgelagerte Arbeitsprozesse sind beispielsweise das Düngen oder eine mechanische Bekämpfung von Beikräutern im Bestand. Die Ressourcenplanung berücksichtigt dabei die im Kontext mit dem jeweiligen Arbeitsprozess erforderliche und geeignete Arbeitsmaschine 7 und das Anbaugerät 8, deren hierfür erforderlichen Betriebsmittelbedarf und dergleichen mehr.

Das Planungssystem 1 kann dazu eingerichtet sein, auf zumindest einen Planungsvorgang einer in der Vergangenheit liegenden Planung, insbesondere Vorjahresplanung, zuzugreifen und darauf basierend dem durchzuführenden Arbeitsprozess die Planung des historischen Planungsvorgangs zuzuordnen, die dem korrespondierenden Arbeitsprozess in der Vergangenheit bereits zugrunde lag. Die in der Vergangenheit erstellte Planung kann dabei eine Grundlage der Planung 6 für den durchzuführenden Arbeitsprozess bilden, die durch das Planungssystem 1 entsprechend der im Zeitpunkt der Generierung der Planung 6 verfügbaren arbeitsmaschinenspezifischen, anbaugerätespezifischen und feldspezifischen Parameter 10 sowie Umgebungs- und Umweltparameter 11 modifiziert wird. Dies gilt für die vom Arbeitsprozess umfassten Teilprozesse entsprechend.

So kann das Planungssystem 1 dazu eingerichtet sein, bei der Generierung der Planung 6 dem durchzuführenden Arbeitsprozess zeitlich vorgelagerte und/oder nachgelagerte Arbeitsprozesse und/oder eine in einem zeitlich vorgelagerten Arbeitsprozess generierte Routenplanung und/oder durch eine landwirtschaftliche, bemannte und/oder unbemannte, Arbeitsmaschine 7 bereits abgefahrene Route zu berücksichtigen. Die in einem zeitlich dem zu planenden Arbeitsprozess vorgelagerten Arbeitsprozess generierte Routenplanung kann durch eine bemannte Arbeitsmaschine und/oder eine autonome Arbeitsmaschine 7 aufgezeichnet worden sein. Dabei können beispielsweise in einem vorgelagerten Arbeitsprozess, beispielsweise der Aussaat, bereits erzeugte bzw. bestehende Fahrgassen verwendet werden, um deren Lage bei dem zu planenden Arbeitsprozess des Pflanzenschutzes durch die ausführende Arbeitsmaschine 7 und das daran adaptierte Anbaugerät 8 zu berücksichtigen. Das voranstehende Beispiel ist exemplarisch zu verstehen; eine analoge Anwendung wäre beispielsweise bei einer Erntekampagne denkbar, welche die Erzeugung von Futtermittel zum Gegenstand hat.

Gemäß einem weiteren Aspekt kann das Planungssystem 1 dazu eingerichtet sein, automatisch einen Vorschlag für die zu generierende Planung 6 für den durchzuführenden Arbeitsprozess basierend auf von in einem in der Vergangenheit liegenden Vergleichszeitraum, vorzugsweise Vorjahreszeitraum, erfassten Daten desselben Arbeitsprozesses an derselben Lokation zu generieren und mittels der Benutzerschnittstelle 2 dem Bediener zur Auswahl zu stellen. Hierdurch wird eine Vereinfachung der Generierung der Planung 6 erreicht. Die Erfassung und/oder Bereitstellung von Vergleichsdaten, die in einem in der Vergangenheit liegenden Vergleichszeitraum angefallen sind, kann durch eine bemannte und/oder autonome Arbeitsmaschine 7 und/oder eine manuelle Eingabe durch den Bediener erfolgt sein. Die Vergleichsdaten können dabei sowohl in der zumindest einen Datenbank 9 des Planungssystems 1 als auch in der externen Datenquelle 14, insbesondere dem Farmmanagementsystem 15, abrufbar hinterlegt sein.

Eine weitere Möglichkeit ergibt sich daraus, dass das Planungssystem 1 dazu eingerichtet ist, automatisch einen Vorschlag für die zu generierende Planung 6 für den durchzuführenden Arbeitsprozess basierend auf Vergleichsdaten desselben Arbeitsprozesses an zumindest einer anderen Lokation zu generieren und mittels der Benutzerschnittstelle 2 zur Auswahl zu stellen. Dies ermöglicht es dem Bediener, beim Fehlen von Vergleichsdaten für das konkret zu bearbeitende Feld zumindest einen Vorschlag für die zu generierende Planung 6 zu erhalten oder diesen Vorschlag mit den Vergleichsdaten für den in der Vergangenheit liegenden Vergleichszeitraum des betreffenden Feldes zu vergleichen.

Gemäß einem weiteren Aspekt kann das Planungssystem 1 dazu eingerichtet sein, die Vergleichsdaten desselben an mehreren anderen Lokationen durchgeführten Arbeitsprozesses auszuwerten und für die jeweiligen Daten Mittelwerte zu bilden und/oder die der Durchführung eines Arbeitsprozesses zugrundeliegenden Vergleichsdaten einer Lokation mit maximalem Ertrag zu bestimmen und die auf Mittelwerten und/oder maximalem Ertrag basierenden Daten zur Generierung der Planung 6 zu verwenden.

Eine weitere Möglichkeit zur Generierung der optimierten Planung 6 durch das Planungssystem 6 besteht darin, dass das Planungssystem 1 vorhandene Vergleichsdaten mittels künstlicher Intelligenz analysiert. So kann das Planungssystem 1 ein künstliches neuronales Netzwerk verwenden, um die Vergleichsdaten, welche die in der Vergangenheit verwendeten arbeitsmaschinenspezifischen, anbaugerätespezifischen und feldspezifischen Parameter 10 sowie Umgebungs- und Umweltparameter 11 repräsentieren, als Eingangsdatensatz auszuwerten und als Ausgangsdaten die darauf basierende Planung 6 zu bestimmen.

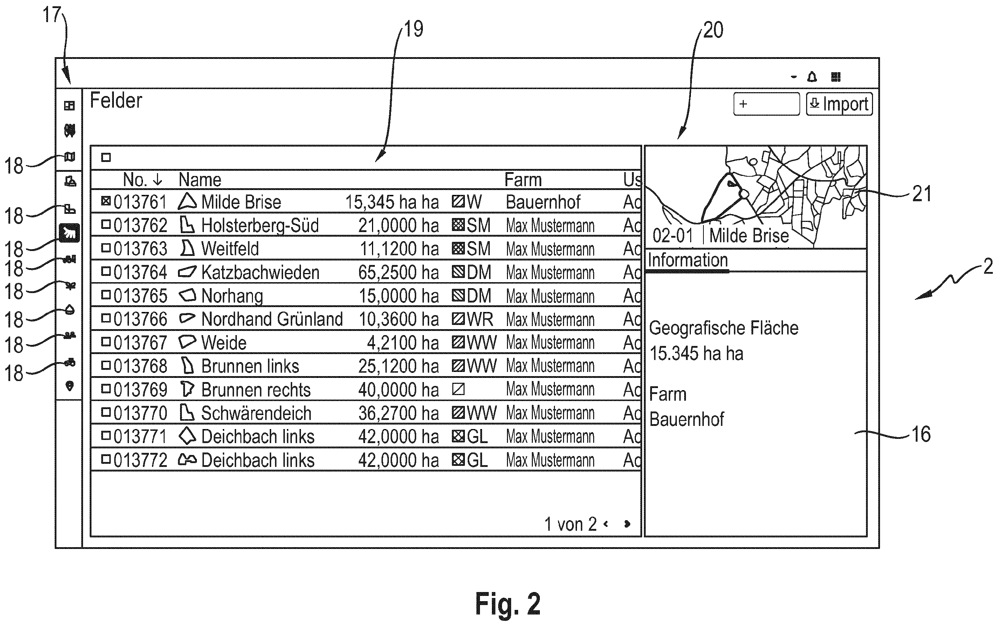

Das Planungssystem 1 ist dazu eingerichtet, mittels der Benutzerschnittstelle 2 die Generierung der Planung 6 für den durchzuführenden Arbeitsprozess dialoggeführt durch manuelle Interaktion durchzuführen. Dieser Vorgang wird weiter unten unter Bezugnahme auf die Fig. 2 bis 4 näher erläutert.

Ein weiterer Aspekt besteht in der Simulation des durchzuführenden Arbeitsprozesses durch eine für die Durchführung geeignete autonome landwirtschaftliche Arbeitsmaschine 7 und des zumindest einen an der Arbeitsmaschine 7 adaptierten Anbaugerätes 8. Das Planungssystem 1 ist dazu eingerichtet, unter Verwendung von in der zumindest einen Datenbank 9 hinterlegten topografischen Daten des Feldes, auf welchem der für die autonome Arbeitsmaschine 7 zu planende Arbeitsprozess durchzuführen ist, und den korrespondierenden feldspezifischen Parametern 10 des Feldes ein digitales Abbild des Feldes zu generieren und von den in der zumindest einen Datenbank 9 hinterlegten arbeitsmaschinenspezifischen und anbaugerätespezifischen Parametern 10 ein digitales Abbild der autonomen landwirtschaftlichen Arbeitsmaschine 7 und des zumindest einen an der Arbeitsmaschine 7 adaptierten Anbaugerätes 8 zu generieren, um mittels eines in der Speichereinheit 5 hinterlegten mathematischen Modells die Durchführung unter Berücksichtigung der Umgebungs- und Umweltparameter 11 zu simulieren und auf Basis der Simulation die Planung 6 zu generieren.

Vorteilhaft ist es, wenn das Planungssystem 1 dazu eingerichtet ist, die durch die Simulation generierte Planung 6 mittels der Benutzerschnittstelle 2, insbesondere visuell wahrnehmbar, auszugeben. Mittels der Benutzerschnittstelle 2 können nachträglich manuelle Änderungen von der Simulation zugrundeliegenden Rahmenbedingungen durchführbar sein.

Das Planungssystem 1 ist des Weiteren dazu eingerichtet, die Simulation basierend auf den nachträglichen Änderungen erneut durchzuführen, um die generierte Planung 6 an nachträglich geänderte Rahmenbedingungen anzupassen. Änderungen von Rahmenbedingungen können, abhängig vom zeitlichen Abstand zwischen der Planung und der vorgesehenen Durchführung des Arbeitsprozesses, auf kurzfristig oder weiter zurückliegende Ereignisse zurückgehen. Ein weiter zurückliegendes Ereignis kann beispielsweise eine Trockenperiode oder eine Regenperiode im Frühjahr sein, die im Zeitpunkt der Planung unberücksichtigt geblieben ist. Kurzfristig auftretende Ereignisse können ein Kälteeinbruch oder ein Ausfall von eingeplanten Arbeitsmaschinen 7 und/oder Anbaugeräten 8 sein. Ebenso kann das Auftreten einer Regenphase zwischen zwei bereits geplanten, zeitlich aufeinanderfolgenden Arbeitsprozessen dazu führen, dass die Simulation unter geänderten Rahmenbedingungen erneut durchzuführen ist. Dies kann durch das Planungssystem 1 anlassbezogen automatisch erfolgen. Alternativ kann der Bediener des Planungssystems 1 die erneute Simulation manuell veranlassen.

Das Planungssystem 1 ist dazu eingerichtet, mittels der Simulation generierte Arbeitsabläufe des Arbeitsprozesses und damit verbundene Ergebnisgrößen, insbesondere Ressourcenverbrauch, gefahrene Strecke, Arbeitszeit, Arbeitsbeginn und Arbeitsende, Einsatzdauer der autonomen Arbeitsmaschine und dergleichen mehr, mittels der Benutzerschnittstelle 2 zu visualisieren.

Gemäß einem weiteren Aspekt kann das Planungssystem 1 dazu eingerichtet sein, die generierte Planung 6 vor der Durchführung des geplanten Arbeitsprozesses, insbesondere innerhalb eines vorgebbaren zeitlichen Abstands vor der Durchführung, mittels der Benutzerschnittstelle 2 zu visualisieren. Dem liegt die Überlegung zugrunde, dass durchgeführte Planungen eines Arbeitsprozesses und eine sich daraus ergebende Planung 6 zeitlich signifikant auseinanderfallen können. So können zwischen den einzelnen Arbeitsprozessen, aber auch zwischen einzelnen Teilprozessen, Zeitspannen liegen, die mehrere Tage, Wochen oder Monate umfassen können. Entsprechend bietet die Visualisierung mittels der Benutzerschnittstelle 2 innerhalb eines vorgebbaren zeitlichen Abstands vor der Durchführung des geplanten Arbeitsprozesses und/oder Teilprozesses dem Bediener die Möglichkeit, die bereits generierte Planung 6 zu prüfen und erforderlichenfalls anzupassen.

So kann das Planungssystem 1 dazu eingerichtet sein, automatisch zu prüfen, ob in der zumindest einen Datenbank 9 eine Aktualisierung der Daten erfolgt ist, welche im Zeitpunkt der Generierung der Planung 6 verwendet wurden, und auf eine erfolgte Aktualisierung der Daten mittels der Benutzerschnittstelle 2 durch Visualisierung hinzuweisen. Dies ermöglicht es dem Bediener des Planungssystems 1, eine zeitlich weiter zurückliegende Simulation durch das Planungssystem 1 erneut durchführen zu lassen.

In Fig. 2 ist schematisch eine Darstellung der Benutzerschnittstelle 2 des Planungssystems 1 gezeigt. Mit dem Planungssystem 1 können alle relevanten Parameter und Einstellungen systemtechnisch von der autonomen Arbeitsmaschine 7 und dem daran adaptierten Anbaugerät 8 unabhängig und vor dem geplanten Einsatz der autonomen Arbeitsmaschine 7 respektive der Kombination generiert werden.

Die Benutzerschnittstelle 2 umfasst eine grafische Benutzeroberfläche 16, welche der Eingabe und/oder Auswahl sowie Ausgabe von Informationen dient. In einer Spalte 17 der Benutzeroberfläche 16 sind verschiedene Icons 18 arrangiert, welche unterschiedliche Menüoptionen umfassen. Im dargestellten Ausführungsbeispiel ist das Icon 18 mit der ausgewählten Menüoption "Felder" hervorgehoben. In einem neben der Spalte 17 angeordneten Abschnitt 19 ist eine Übersicht verschiedener landwirtschaftlicher Nutzflächen, insbesondere Felder und Schläge, mit spezifischen Kenngrößen, wie unter anderem Bezeichnung und geografischer Fläche, dargestellt. Diese spezifischen Kenngrößen werden aus der zumindest einen Datenbank 9 des Planungssystems 1 abgerufen. Die in der Übersicht im Abschnitt 19 wiedergegebenen Kenngrößen zu den einzelnen landwirtschaftlichen Nutzflächen sind der zumindest einen Datenbank 9 entnommen. Beispielhaft ist eine konkrete, aus der Übersicht im Abschnitt 19 ausgewählte landwirtschaftliche Nutzfläche in einem weiteren Abschnitt 20 der Benutzeroberfläche 16 grafisch dargestellt. Neben einer Miniaturkarte 21, welche beispielsweise eine Luftaufnahme eines Landschaftsabschnitts zeigt, in dem sich die ausgewählte Nutzfläche befindet, können zusätzliche Kenngrößen dargestellt sein, die neben der geografischen Fläche auch die Art des die Nutzfläche bewirtschaftenden Betriebes, die erstmalige kultivierende Bearbeitung der Nutzfläche sowie den aktuellen Status der Nutzfläche, d.h. aktiv, z.B. Nutzung für den Anbau von Pflanzen oder eine sonstige Verwendung im landwirtschaftlichen Kontext, oder passiv, für stillgelegte oder brachliegende Nutzflächen.

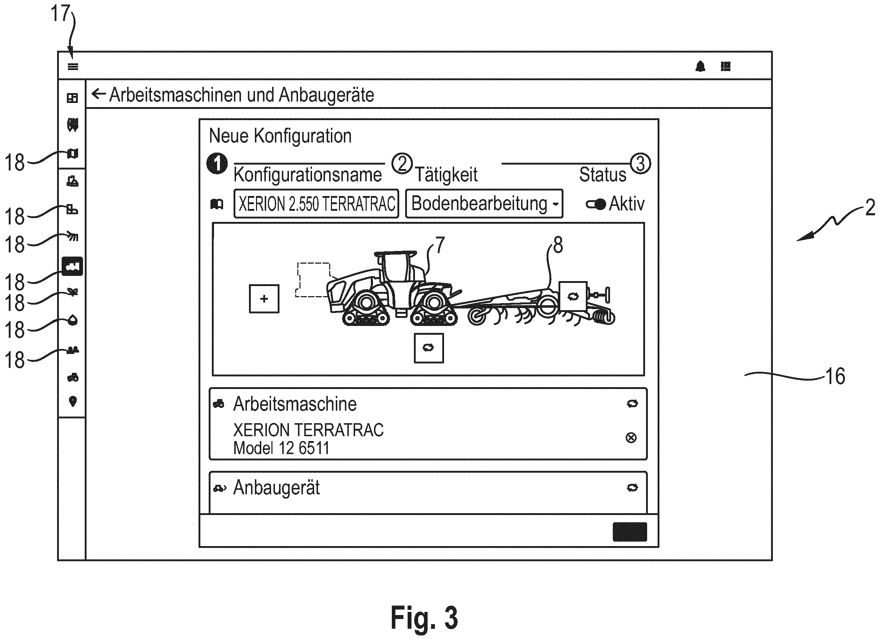

Fig. 3 zeigt schematisch eine Darstellung einer mittels der Benutzerschnittstelle 2 ausgewählten Menüoption des Planungssystems 1. Das aktiv ausgewählte Icon 18, hier die Menüoption "Arbeitsmaschinen und Anbaugeräte", ist hervorgehoben dargestellt. Hier kann für die zuvor ausgewählte Nutzfläche eine neue Kombination aus einer landwirtschaftlichen autonomen Arbeitsmaschine 7 und einem Anbaugerät 8 für einen durchzuführenden spezifischen landwirtschaftlichen Arbeitsprozess, hier bespielhaft die Tätigkeit Bodenbearbeitung als Arbeitsprozess, konfiguriert werden.

Die Auswahl durch den Bediener ist auf die geeigneten autonomen Arbeitsmaschinen 7 und die für den durchzuführenden Arbeitsprozess geeigneten Anbaugeräte 8 beschränkt, die im Zeitpunkt der Generierung der Planung 6 als verfügbar gelten.

Alternativ kann, wie weiter oben ausgeführt, auf eine in der Datenbank 9 bereits hinterlegte Kombination aus einer landwirtschaftlichen autonomen Arbeitsmaschine 7 und einem daran adaptierten Anbaugerät 8 zurückgegriffen werden.

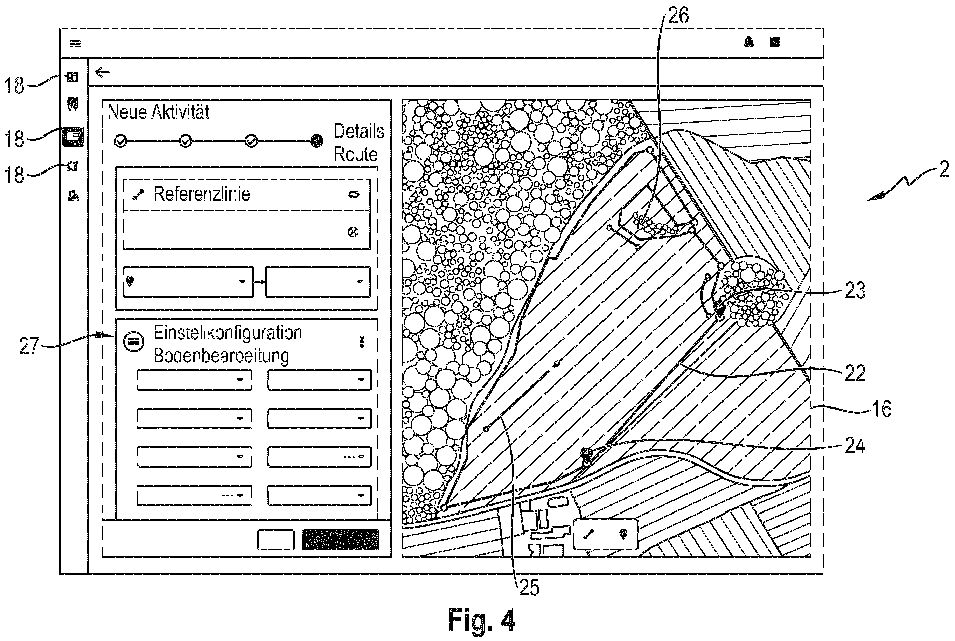

In Fig. 4 ist schematisch eine Darstellung einer durch das Planungssystem 1 generierten Route als ein Teil der Planung 6, die mittels der Benutzerschnittstelle 2 ausgegebenen wird, gezeigt.

Hierzu gibt das Planungssystem 1 für den Arbeitsprozess Bodenbearbeitung als Teil der Planung 6 arbeitsmaschinenspezifische, anbaugerätespezifische und feldspezifische Parameter 10 aus. Dabei kann es sich um die Darstellung einer Feldgrenze 22 eines in vorangehenden Schritt ausgewählten bearbeitenden Feldes, wie anhand von Fig. 2 erläutert, um Angaben eines Startpunkt 23 und eines Endpunkt 24 zur Ableitung zumindest einer Referenzlinie 25 handeln. Weitere Parameter bilden eine durch die Feldgrenze 22 vorgegebene Feldkontur sowie auf dem Feld vorhandene Hindernisse 26. Die in Fig. 4 dargestellte, auf die Routenplanung begrenzte Planung 6 kann auf in der Datenbank 9 hinterlegten Daten zu diesem spezifischen Feld beruhen, wie weiter oben bereits ausgeführt.

Weiterhin werden in einem Anzeigesegment 27 für die Routenplanung erforderliche Parameter der Planung 6 angezeigt, beispielsweise ein einzuhaltender Abstand zur Feldgrenze 22, eine Arbeitsbreite des Anbaugerätes 8, eine Spurbreite der Arbeitsmaschine 7, eine Anzahl an Vorgewendesequenzen. Diese Parameter sind durch den Bediener veränderbar.

### Bezugszeichenliste

- 1: Planungssystem
- 2: Benutzerschnittstelle
- 3: Kommunikationseinheit
- 4: Recheneinheit
- 5: Speichereinheit
- 6: Planung
- 7: Autonome Arbeitsmaschine
- 8: Anbaugerät
- 9: Datenbank
- 10: Parameter
- 11: Parameter
- 12: Netzwerk
- 13: Webseite
- 14: Datenquelle
- 15: Farmmanagementsystem
- 16: Benutzeroberfläche
- 17: Spalte
- 18: Icon
- 19: Abschnitt
- 20: Abschnitt
- 21: Miniaturkarte
- 22: Feldgrenze
- 23: Startpunkt
- 24: Endpunkt
- 25: Referenzlinie
- 26: Hindernis
- 27: Anzeigesegment

## Patentansprüche

1. Planungssystem (1), umfassend eine Benutzerschnittstelle (2), eine Kommunikationseinheit (3), eine Recheneinheit (4) und eine Speichereinheit (5), wobei das Planungssystem (1) dazu eingerichtet ist, eine Planung (6) zur Durchführung eines landwirtschaftlichen Arbeitsprozesses oder zumindest eines vom Arbeitsprozess umfassten Teilprozesses zu generieren und an zumindest eine für die Durchführung eingerichtete autonome landwirtschaftliche Arbeitsmaschine (7) zur Steuerung, Regelung und/oder Parametrisierung der autonomen Arbeitsmaschine (7) und zumindest eines an der Arbeitsmaschine (7) adaptierten Anbaugerätes (8) zu übertragen, **dadurch gekennzeichnet, dass** das Planungssystem (1) dazu eingerichtet ist, zur Generierung der Planung (6) für den Betrieb der autonomen Arbeitsmaschine (7) in zumindest einer Datenbank (9) hinterlegte Daten abzurufen und zu verwenden, welche im Zeitpunkt der Generierung der Planung (6) verfügbare arbeitsmaschinenspezifische, anbaugerätespezifische und feldspezifische Parameter (10) sowie Umgebungs- und Umweltparameter (11) sind, und die Planung (6) mittels der Benutzerschnittstelle (2) auszugeben.

2. Planungssystem (1) nach Anspruch 1, **dadurch gekennzeichnet, dass** das Planungssystem (1) dazu eingerichtet ist, bei der Generierung der Planung (6) Ablaufdaten einer abzuarbeitenden landwirtschaftlichen Erntekampagne, die den Arbeitsprozess sowie zumindest einen weiteren abweichenden Arbeitsprozess und eine mit den Arbeitsprozessen verbundene Ressourcenplanung umfasst, als Eingangsgrößen zur Optimierung der Planung (6) zu berücksichtigen.

3. Planungssystem (1) nach Anspruch 1 oder 2, **dadurch gekennzeichnet, dass** das Planungssystem (1) dazu eingerichtet sein, auf wenigstens eine Planung (6) eines in der Vergangenheit liegenden Planungsvorgangs, insbesondere einer Vorjahresplanung, zuzugreifen und darauf basierend dem durchzuführenden Arbeitsprozess die Planung (6) zuzuordnen, die dem korrespondierenden Arbeitsprozess in der Vergangenheit zugrunde lag.

4. Planungssystem (1) nach einem der Ansprüche 1 bis 3, **dadurch gekennzeichnet, dass** das Planungssystem (1) dazu eingerichtet ist, bei der Generierung der Planung (6) dem durchzuführenden Arbeitsprozess zeitlich vorgelagerte und/oder nachgelagerte Arbeitsprozesse und/oder eine in einem zeitlich vorgelagerten Arbeitsprozess generierte Routenplanung und/oder durch eine landwirtschaftliche Arbeitsmaschine abgefahrene Route zu berücksichtigen.

5. Planungssystem (1) nach einem der vorangehenden Ansprüche, **dadurch gekennzeichnet, dass** das Planungssystem (1) dazu eingerichtet ist, automatisch einen Vorschlag für die zu generierende Planung (6) für den durchzuführenden Arbeitsprozess basierend auf von in einem in der Vergangenheit liegenden Vergleichszeitraum erfassten Daten desselben Arbeitsprozesses an derselben Lokation zu generieren und mittels der Benutzerschnittstelle (2) zur Auswahl zu stellen.

6. Planungssystem (1) nach einem der vorangehenden Ansprüche, **dadurch gekennzeichnet, dass** das Planungssystem (1) dazu eingerichtet ist, automatisch einen Vorschlag für die zu generierende Planung (6) für den durchzuführenden Arbeitsprozess basierend auf Vergleichsdaten desselben Arbeitsprozesses an zumindest einer anderen Lokation zu generieren und mittels der Benutzerschnittstelle (2) zur Auswahl zu stellen.

7. Planungssystem (1) nach Anspruch 6, **dadurch gekennzeichnet, dass** das Planungssystem (1) dazu eingerichtet ist, die Vergleichsdaten desselben an mehreren anderen Lokationen durchgeführten Arbeitsprozesses auszuwerten und für die jeweiligen Daten Mittelwerte zu bilden und/oder die der Durchführung eines Arbeitsprozesses zugrundeliegenden Vergleichsdaten einer Lokation mit maximalem Ertrag zu bestimmen und die auf Mittelwerten und/oder maximalem Ertrag basierenden Daten zur Generierung der Planung (6) zu verwenden.

8. Planungssystem (1) nach einem der vorangehenden Ansprüche, **dadurch gekennzeichnet, dass** das Planungssystem (1) dazu eingerichtet ist, mittels der Benutzerschnittstelle (2) die Generierung der Planung (6) für den durchzuführenden Arbeitsprozess dialoggeführt durch manuelle Interaktion durchzuführen.

9. Planungssystem (1) nach einem der vorangehenden Ansprüche, **dadurch gekennzeichnet, dass** das Planungssystem (1) dazu eingerichtet ist, unter Verwendung von in der zumindest einen Datenbank (9) hinterlegten topografischen Daten eines Feldes, auf welchem der für die autonome Arbeitsmaschine (7) zu planende Arbeitsprozess durchzuführen ist, und den korrespondierenden feldspezifischen Parametern des Feldes ein digitales Abbild des Feldes zu generieren und von den in der zumindest einen Datenbank (9) hinterlegten arbeitsmaschinenspezifischen und anbaugerätespezifischen Parametern (10) ein digitales Abbild der autonomen Arbeitsmaschine (7) und des zumindest einen an die Arbeitsmaschine (7) adaptierten Anbaugerätes (8) zu generieren, um mittels eines in der Speichereinheit (5) hinterlegten mathematischen Modells die Durchführung zu simulieren und auf Basis der Simulation die Planung (6) zu generieren.

10. Planungssystem (1) nach Anspruch 9, **dadurch gekennzeichnet, dass** das Planungssystem (1) dazu eingerichtet ist, die durch die Simulation generierte Planung (6) mittels der Benutzerschnittstelle (2), insbesondere visuell wahrnehmbar, auszugeben und dass mittels der Benutzerschnittstelle (2) nachträglich manuelle Änderungen von der Simulation zugrundeliegenden Rahmenbedingungen durchführbar sind, wobei das Planungssystem (1) dazu eingerichtet ist, die Simulation basierend auf den nachträglichen Änderungen erneut durchzuführen.

11. Planungssystem (1) nach Anspruch 9 oder 10, **dadurch gekennzeichnet, dass** das Planungssystem (1) dazu eingerichtet ist, mittels der Simulation generierte Arbeitsabläufe des Arbeitsprozesses und damit verbundene Ergebnisgrößen mittels der Benutzerschnittstelle (2) zu visualisieren.

12. Planungssystem (1) nach einem der vorangehenden Ansprüche, **dadurch gekennzeichnet, dass** das Planungssystem (1) dazu eingerichtet ist, die generierte Planung (6) vor der Durchführung des geplanten Arbeitsprozesses, insbesondere innerhalb eines vorgebbaren zeitlichen Abstands vor der Durchführung, mittels der Benutzerschnittstelle (2) zu visualisieren.

13. Planungssystem (1) nach einem der vorangehenden Ansprüche, **dadurch gekennzeichnet, dass** das Planungssystem (1) dazu eingerichtet ist, automatisch zu prüfen, ob in der zumindest einen Datenbank (9) eine Aktualisierung der Daten erfolgt ist, welche im Zeitpunkt der Generierung der Planung (6) verwendet wurden, und dies mittels der Benutzerschnittstelle (2) zu visualisieren.

14. Planungssystem (1) nach einem der vorangehenden Ansprüche, **dadurch gekennzeichnet, dass** das Planungssystem (1) dazu eingerichtet ist, zumindest eine Erntekampagne auf Basis von Daten zu planen, die in einem Rechner mit einer Farm-Management-Software (15) als Datenquelle (14) hinterlegt sind und/oder dass die Datenquelle (14) ein Rechner mit einer landwirtschaftlichen Auftragsmanagementsoftware ist.

15. Planungssystem (1) nach einem der vorangehenden Ansprüche, **dadurch gekennzeichnet, dass** das Planungssystem (1) dazu eingerichtet ist, mittels der Benutzerschnittstelle (2) einen innerhalb der zumindest einen geplanten Erntekampagne durchzuführenden einzelnen Arbeitsprozess auszuwählen und/oder einen dem ausgewählten Arbeitsprozess zugehörigen Teilprozess auszuwählen, für den das Planungssystem (1) die Planung (6) generiert.
